# DEMANDE DE BREVET EUROPEEN

(11) **EP 1 225 529 A1**
(43) Date de publication de la demande: **24.07.2002**
(21) Numéro de dépôt: 01403220.5
(22) Date de dépôt: 12.12.2001
(51) Int. Cl.: G06F 17/60

(54) **Procédé de traitement d'annonces sur un terminal de réseau informatique et terminal pour mettre en oeuvre le procédé**

(30) Priorité: 17.01.2001 FR 0100589
(71) Demandeur: SAGEM S.A., 75015 Paris (FR)
(72) Inventeur: Vermande, Michel, 95770 Montreul-sur-Epte (FR)
(74) Mandataire: Bloch, Gérard

(57) **Abrégé**

Dans le procédé de l'invention de traitement d'annonces (1) envoyées à la requête d'un annonceur sur un terminal de traitement de données (6) d'un réseau informatique, quand le terminal est en cours de communication sur le réseau et qu'il reçoit des annonces, il les stocke dans une mémoire (13) sans les afficher, pour pouvoir, quand la communication est rompue, les afficher (11) et les visualiser en naviguant dans la mémoire (13).

Le terminal (6) comporte un module de services WAP (9), une mémoire d'annonces (13), des moyens (14) de gestion de la mémoire d'annonces (13) et des moyens (7, 9, 12, 14, 20) de navigation dans la mémoire d'annonces (13).

L'invention s'applique bien aux terminaux cellulaires WAP.

## Description

Avec un terminal de traitement de données comme un ordinateur personnel, quand on navigue sur un réseau informatique du type de l'Internet, on reçoit des annonces publicitaires qui cachent une partie de l'écran, mais une petite partie seulement. Il n'y a donc pas beaucoup de pertes d'informations. Et puis, on sait les faire disparaître.

Avec un terminal WAP d'un réseau de radiotéléphonie cellulaire, bien que l'écran soit plus grand que ceux des terminaux classiques, il reste encore trop petit pour que ces publicités ne soient pas une gène.

Qu'elles masquent une petite partie relative des informations, dans le cas d'un ordinateur personnel, ou une plus grande partie relative, dans le cas d'un terminal téléphonique, la demanderesse a cherché à s'affranchir des publicités en cours de communication sur le réseau, sans pour autant les considérer comme parasites et c'est ainsi qu'elle propose son invention.

L'invention concerne tout d'abord un procédé de traitement d'annonces envoyées à la requête d'un annonceur sur un terminal de traitement de données d'un réseau informatique, dans lequel, quand le terminal est en cours de communication sur le réseau et qu'il reçoit des annonces, il les stocke dans une mémoire sans les afficher, pour pouvoir, quand la communication est rompue, les afficher et les visualiser en naviguant dans la mémoire, caractérisé par le fait que, si au cours d'une navigation dans la mémoire de stockage d'annonces, pour en visualiser, on affiche une annonce contenant un lien avec un site extérieur, une communication est automatiquement rétablie pour pouvoir visiter le site.

Grâce à l'invention, les communications ne sont pas perturbées par les annonces " obligées " momentanément indésirables, les usagers pouvant les visualiser à leur guise, de façon sélective et quand bon leur semble. Les annonces ne sont plus imposées, ni mal vécues.

De façon avantageuse, on marque les annonces pour pouvoir les discriminer d'autres données du réseau et on relève les annonces visualisées pour attribution de récompenses à l'usager du terminal de traitement.

Grâce à cela, les annonceurs peuvent correctement mesurer l'impact de leurs publicités auprès des usagers. De même, l'opérateur du réseau peut ainsi disposer d'un indicateur de la manière dont les usagers perçoivent son rôle d'intermédiaire.

Il est intéressant d'envoyer des annonces à un terminal en raison de sa carte SIM à laquelle sont attachés des droits d'annonces.

L'invention concerne également un terminal de traitement de données d'un réseau informatique, comprenant un ensemble d'interface homme-machine, un connecteur de carte SIM, un module de navigation dans un menu et un module de services WAP, terminal caractérisé par le fait qu'il comporte en outre une mémoire d'annonces, des moyens de gestion de la mémoire d'annonces et des moyens de navigation dans la mémoire d'annonces, caractérisé par le fait qu'il est prévu dans le terminal des moyens d'établissement automatique de communication sur le réseau commandés par les moyens de gestion de la mémoire d'annonces.

L'invention sera mieux comprise à l'aide de la description suivante du procédé et du terminal, en référence au dessin annexé, sur lequel :

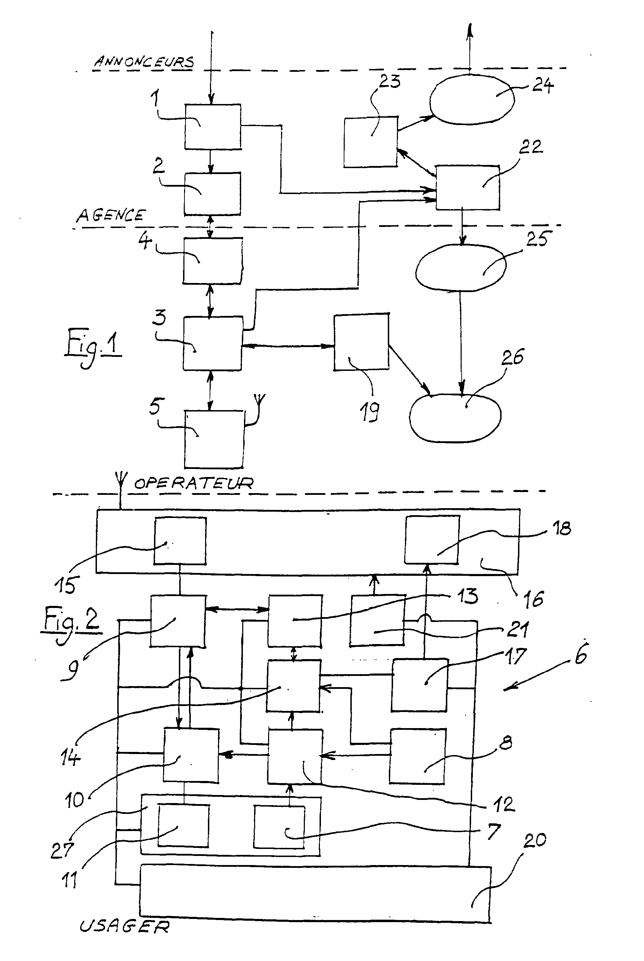

- la figure 1 est une illustration par blocs du procédé de l'invention, dans les mondes de la publicité et d'un opérateur de réseau informatique et
- la figure 2 est un schéma par blocs d'un terminal de traitement de données du réseau.

L'invention s'applique essentiellement au traitement des annonces publicitaires. Toutefois, elle peut recevoir d'autres applications et concerner tout aussi bien le traitement de pages de catalogue, de tarif ou tout autre document commercial. C'est pourquoi, par la suite, il ne sera question que d'annonces.

### 1 - Envoi et affichage d'annonces sur terminaux de traitement de données

### 1.1 Monde de la publicité

Les annonceurs ont préparé des lots d'annonces publicitaires qu'ils transmettent, et ici pour simplifier, à une seule agence de publicité qui les stocke dans une base de données 1. Avec les annonces de la base 1, l'agence alimente un serveur d'annonces 2, connecté à un réseau informatique, ici le réseau de l'Internet.

### 1.2 Monde de l'opérateur du service d'annonces WAP

Sur requêtes de l'agence, représentant ses annonceurs, à un opérateur du service d'annonces WAP du réseau Internet, l'agence envoie à un centre de messagerie d'annonces 3 de l'opérateur, des annonces sélectionnées à destination d'usagers particuliers déterminés par leurs cartes SIM (module d'identification d'abonné) auxquelles sont attachés des droits d'annonces, ces envois s'effectuant par l'intermédiaire d'une passerelle 4 du réseau Internet. Quand les usagers ainsi déterminés communiquent sur leur réseau de radiotéléphonie cellulaire auquel ils sont abonnés, le centre de messagerie 3 leur envoie des annonces sélectionnées, par l'intermédiaire ici de stations de base 5 du réseau de radiotéléphonie. Les annonces envoyées sont marquées pour des raisons abordées plus loin.

### 1.3 Monde d'un usager détenteur d'un terminal WAP de traitement de données

Un usager est donc détenteur d'un terminal WAP 6.

### 1.3.1 Réception des annonces

Par l'intermédiaire d'un clavier 7 d'un ensemble d'interface homme-machine 27 et d'un module 12 de navigation dans un menu, initialisé par sa carte SIM disposée dans un connecteur de carte SIM 8, l'usager active un module de services WAP 9 de son terminal, par l'intermédiaire d'un bloc de commutation 10 isolant, pour ces seules annonces, l'écran 11 de l'interface 27 du terminal.

Les annonces reçues sur la voie réception 15 du bloc radio 16 du terminal 6, qui sont marquées pour pouvoir les discriminer des autres données du réseau, sont alors stockées dans une mémoire d'annonces 13, sous la commande d'un module 14 de gestion de cette mémoire 13 contrôle par la carte SIM 8 et le module de navigation 12. La mémoire 13 est continuellement mise à jour au cours des communications et de la navigation WAP.

### 1.3.2 Affichage et visualisation des annonces

Lorsque l'usager a interrompu ses communications WAP, à l'aide du clavier 7, du module WAP 9, du module de gestion 14 et du module de navigation 12 comportant un programme de navigation dans la mémoire de stockage d'annonces 13, d'une part, et du contrôleur 20 du terminal, auquel les composants du terminal sont reliés, d'autre part, l'usager peut naviguer dans la mémoire d'annonces 13 et afficher à l'écran 11 les annonces qu'il souhaite visualiser.

Dans le cas, dans une annonce affichée, d'un lieu avec un site extérieur, le bloc de lancement de communication 21 du terminal 6, relié au bloc radio 16, sous la commande du module de gestion 14 et du contrôleur 20, rétablit automatiquement la communication du terminal pour visiter le site.

### 2. Relève des affichages et attribution de récompenses

Elles concernent aussi bien le monde de l'usager que ceux de l'opérateur et de la publicité. Les annonces qui sont affichées et visualisées par l'usager sont relevées pour attribution de récompenses. La relève peut être effectuée au fil de l'affichage ou ultérieurement, lors d'étapes particulières.

Le module de gestion de mémoire 14 contrôle un module, de relève 17 qui, par l'intermédiaire de la voie annoncée 18 du bloc radio 16 du terminal 6 et de la station de base 5 associée, transmet un message à l'opérateur, sur son centre de messagerie d'annonces 3. Un message contient les références des annonces visualisées par l'usager, grâce à leur marquage, ainsi que les références de sa carte SIM, qui est identifiée dans un registre 19 d'identification HLR (Home Locator Register) de l'opérateur. Le centre de messagerie 3 de l'opérateur est également relié à un bloc 22 de comptabilisation des affichages de l'agence de publicité reliée à la base de données 1 et qui alimente une base de ces informations 23.

A partir de la base d'informations 23, l'agence de publicité peut facturer (24) ses annonceurs.

Le bloc de comptabilisation 22 de l'opérateur fournit aussi à un bloc d'attribution de récompenses 25 de l'opérateur les données qui vont permettre, en combinaison avec celles du registre d'identification 19, de créditer (26) l'usager.

## Revendications

1. Procédé de traitement d'annonces (1) envoyées à la requête d'un annonceur sur un terminal de traitement de données (6) d'un réseau informatique, dans lequel, quand le terminal est en cours de communication sur le réseau et qu'il reçoit des annonces, il les stocke dans une mémoire (13) sans les afficher, pour pouvoir, quand la communication est rompue, les afficher (11) et les visualiser en naviguant dans la mémoire (13) **caractérisé par le fait que**, si au cours d'une navigation dans la mémoire de stockage d'annonces (13), pour en visualiser, on affiche (11) une annonce contenant un lien avec un site extérieur, une communication est automatiquement rétablie (21) pour pouvoir visiter le site.

2. Procédé selon la revendication 1, dans lequel on marque les annonces pour pouvoir les discriminer d'autres données du réseau.

3. Procédé selon la revendication 2, dans lequel on relève les annonces visualisées pour attribution (25, 26) de récompenses à l'usager du terminal de traitement (6).

4. Procédé selon l'une des revendications 1 à 3, dans lequel on envoie les annonces à un terminal (6) en raison de sa carte SIM (8).

5. Terminal de traitement de données d'un réseau informatique, comprenant un ensemble d'interface homme-machine (27), un connecteur de carte SIM (8), un module (12) de navigation dans un menu et un module de services WAP (9), terminal **caractérisé par le fait qu'**il comporte en outre une mémoire d'annonces (13), des moyens (14) de gestion de la mémoire d'annonces (13) et des moyens (7, 9, 12, 14, 20) de navigation dans la mémoire d'annonces (13), **caractérisé par le fait qu'**il est prévu des moyens (20, 21) d'établissement automatiques de communication sur le réseau commandés par les moyens (14) de gestion de la mémoire d'annonces (13).
